(19) Europäisches Patentamt
European Patent Office
Office européen des brevets

(11) **EP 4 703 951 A1**

(12) **EUROPEAN PATENT APPLICATION**
published in accordance with Art. 153(4) EPC

(43) Date of publication:
**04.03.2026 Bulletin 2026/10**

(21) Application number: **23936395.5**

(22) Date of filing: **31.10.2023**

(51) International Patent Classification (IPC):
**G06F 30/17** (2020.01)

(52) Cooperative Patent Classification (CPC):
**G06F 30/17; G06F 30/23;** G06F 2119/14

(86) International application number:
**PCT/CN2023/128469**

(87) International publication number:
**WO 2024/230091 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.05.2023 CN 202310513023**

(71) Applicant: **Shanghai Aircraft Manufacturing Co., Ltd.**
**Shanghai 201324 (CN)**

(72) Inventors:
• **LU, Hu**
**Shanghai 201324 (CN)**
• **HE, Xueting**
**Shanghai 201324 (CN)**

• **HU, Jianhua**
**Shanghai 201324 (CN)**
• **WANG, Guanyu**
**Shanghai 201324 (CN)**
• **CAO, Junxia**
**Shanghai 201324 (CN)**
• **SONG, Bo**
**Shanghai 201324 (CN)**
• **SUN, Xiaofeng**
**Shanghai 201324 (CN)**
• **CHEN, Baoguo**
**Shanghai 201324 (CN)**

(74) Representative: **Canzler & Bergmeier**
**Patentanwälte**
**Partnerschaft mbB**
**Despag-Straße 6**
**85055 Ingolstadt (DE)**

(54) **INVERSE SIMULATION METHOD FOR OBTAINING INITIAL FLATTENING MODEL FOR SHOT PEEN FORMING PROCESS**

(57) The present disclosure provides an inverse simulation method for obtaining an initial flattening model for a shot peening forming process, comprising: on the basis of an actual digital model of a target formed part, using computer software to generate a body model and construct a consistent Almen-like strip model; applying a stress field onto the Almen-like strip model in finite element simulation software to perform simulation deformation calculation, continuously adjusting the magnitude of the stress field until calculated deformation is consistent with deformation of an Almen-like strip after a shot peening forming test under selected shot peening process parameters, and determining a corresponding equivalent induced stress field model on this basis; then performing an inversion operation on the equivalent induced stress field model to obtain a reverse stress field; and applying the reverse stress field onto the body model according to a planned process path so as to perform inverse simula-

tion calculation to obtain an initial flattening model, and on the basis of shot peen process parameters corresponding to the applied path and the stress field, obtaining a shot peen process scheme matched with the flattening model.

Generating a body model of a target formed part

↓

Determining the model of equivalent induced stress field corresponding to the selected process parameters of shot peening

↓

Performing a reversal operation on the model of equivalent induced stress field to obtain an inverted stress field

↓

Applying the inverted stress field onto the body model of the part according to a process path which is planned to perform the inverse simulation calculation, thereby obtaining a flattened model

**FIG. 1**

**Description**

TECHNICAL FIELD OF THE INVENTION

The present invention relates to the field of machinery manufacturing, mainly to the field of shot peening forming, and in particular to an inverse simulation method of obtaining an initial flattened model for shot peening forming process.

BACKGROUND TO THE INVENTION

In the shot peening forming process, it is a crucial step for subsequent planning of the process solution of shot peening to obtain a flattened model corresponding to a target formed part. Currently, it is mainly obtained in a simple manner using a "one-step method" in the numerical simulation.

However, the flattening based on the "one-step method" does not take into account the expansion caused by the process, especially for shot peening forming process in which the deformation is achieved by the expansion of material. It has been proven in practice that the flattening without considering the shot peening forming process is often inaccurate. For example, the initial flat digital model is obtained and machined by the "one-step method", and then the shot peening forming test is performed based on the planned process path and process parameters. After that, the shape and dimension of an actual part are often larger than a target value due to the expansion of material caused by the shot peening, and in some cases, the actual part cannot be assembled due to the misalignment of some key features. As a result, it still requires trial and error to correct the initial flattened model (initial flat model) after flattening in the subsequent process, which is time-consuming and laborious.

Moreover, for the shot peening forming process, process parameters and the process path of shot peening forming directly affect the formed geometry of a part. At the same time, the flattening of a part is often correlated to process parameters of shot peening and the process path planning of shot peening. That is, a flattened result should be obtained based on the correction of expansion in a specific shot peening forming process, and the determination of process parameters and the process path of shot peening should be planned based on a valid flattened blank.

Therefore, since process parameters and the process path of shot peening are separated from the flattening of a part according to the existing methods, it is impossible to obtain an accurate initial flattened model for shot peening forming process, and it is inefficient, time-consuming, and laborious.

SUMMARY

Therefore, the technical problem to be solved by the present invention is to provide a new inverse simulation method of obtaining an initial flattened model for shot peening forming process in order to overcome the difficulties of existing methods for shot peening forming process in having low efficiency and obtaining an accurate and reliable initial flattened model.

The present application addresses the above technical problem through the following technical solution.

Specifically, the present application provides an inverse simulation method of obtaining an initial flattened model for shot peening forming process, characterized in that this inverse simulation method includes:

generating a body model of a target formed part by using a computer software based on a digital model of the target formed part;
generating a model of Almen-like strip consistent with the body model of the target formed part by using the computer software, and applying a stress field onto the model of Almen-like strip in a finite element simulation software to perform a simulation-based deformation calculation, wherein the magnitude of a model of stress field is continuously adjusted until the calculated deformation result is consistent with a deformation result obtained by a shot peening forming test of the Almen-like strip using the selected process parameters of shot peening, thereby determining the model of equivalent induced stress field corresponding to the selected process parameters of shot peening; and
performing a reversal operation on the model of equivalent induced stress field by using the finite element simulation software to obtain an inverted stress field, and applying the inverted stress field onto the body model of the target formed part according to a process path which is planned based on the shape and dimension of the target formed part, the selected process parameters of shot peening, and the experience, to perform the inverse simulation calculation, thereby obtaining the initial flattened model.

In the inverse simulation method of obtaining an initial flattened model for shot peening forming process provided by the present application, comprehensive consideration is given to the shape and dimension of the designed target formed part, the selected process parameters and the engineering experience, the initial flattened model can be obtained efficiently and accurately by way of inverse simulation, for the subsequent process of machining and shot peening forming.

Moreover, in this method which is different from existing methods of obtaining an initial flattened model, comprehensive consideration is given to the engineering experience, the path of shot peening, process parameters of shot peening and the equivalent induced stress, instead of directly flattening the target formed part simply according to the experience, and the expansion during shot peening forming is fully considered, thereby ensuring that an accurate initial flattened model can be obtained.

In addition, according to this method, process parameters of shot peening are abstracted into the model of equivalent induced stress and verified by simulation and test with the Almen-like strip, as a result, the validity and reliability of the model of stress and the initial flattened model which have been obtained can be further guaranteed. Furthermore, the adjusted model of equivalent induced stress can also, in turn, adjust actual data of process parameters of shot peening correspondingly, thereby optimal process parameters of shot peening can be obtained.

According to an embodiment of the present invention, the inverse simulation method further includes dividing the body model of the target formed part into several mesh cells and applying the inverted stress field onto the body model of the target formed part according to the planned process path to perform the inverse simulation calculation. In this method, the mesh division is used to facilitate the simulation calculation, and the relationship among granularity, accuracy, and computational cost of the simulation calculation can be balanced effectively by adjusting the size of the mesh cell to be divided.

According to an embodiment of the present invention, the inverse simulation method further includes performing a plane fitting according to the dimensional data of the initial flattened model by using the finite element simulation software to calculate and obtain a variance value between the dimensional data and the fitted plane, wherein the initial flattened model obtained when the variance value is within a preset range is determined as a valid initial flattened model.

Based on actual flatness requirements of the flattened model, according to this method, the validity of the initial flattened model obtained can be further verified by utilizing plane fitting. Specifically, the feasibility of the initial flattened model is determined by the variance value between its dimensional data and an ideal fitted plane. A variance value that is too large indicates that the initial flattened model obtained is not flat enough, rendering it invalid and incapable of being utilized effectively further. The variance value as used herein may be an average of variance values between all dimensional data and the fitted plane.

According to an embodiment of the present invention, the dimensional data includes data about node position of each mesh cell in the initial flattened model, wherein the data about node position is a product of data about node coordinate value and a weight factor of node.

According to an embodiment of the present invention, the weight factor of node is positively correlated with the thickness value corresponding to its mesh cell. In this inverse simulation method, comprehensive consideration is given to the engineering experience that thicker sections of a part often require higher forming accuracy than thinner sections in actual engineering practice. Based on the engineering requirement, by way of introducing a weight factor such that the thicker the plate is, the greater the weight it occupies, i.e., by way of establishing positive correlation between the weight factor of node and the thickness value corresponding to its mesh cell, the theoretical simulation calculation is combined with the actual engineering experience, so as to guarantee that the simulation is not detached from reality, thereby further ensuring the accuracy of the initial flattened model which has been obtained.

According to an embodiment of the present invention, the planned process path includes a plurality of process paths of shot peening, and the inverse simulation method further includes, for each of process paths of shot peening, applying the inverted stress field onto the body model of the target formed part according to the process path of shot peening to perform the inverse simulation calculation, thereby obtaining a plurality of initial flattened models. In this inverse simulation method, comprehensive consideration is given to the actual engineering experience, and an optimal process path of shot peening is obtained by obtaining a plurality of initial flattened models corresponding to a plurality of process paths of shot peening and analyzing the influence of the process path of shot peening on the formed geometry of shot peening.

According to an embodiment of the present invention, the inverse simulation method further includes successively performing the plane fitting on a plurality of initial flattened models to calculate a plurality of corresponding variance values, determining a minimum variance value within a preset range by comparison, and obtaining optimal process parameters and process path of shot peening based on the determined minimum variance value.

According to an embodiment of the present invention, the inverse simulation method further includes continuously adjusting the model of equivalent induced stress field, the planned process path and/or the size of the mesh cell when the variance value lies outside the preset range, until the variance value falls within the preset range, thereby enabling the determination of process parameters of shot peening based on the adjusted model of equivalent induced stress field.

According to this inverse simulation method, an inverse simulation finite element model to be calculated and adjustable can be constructed by determining the equivalent induced stress field and the process path of shot peening, dividing the body model of the target formed part into several mesh cells, then performing a reversal operation on the equivalent induced stress field, and applying the inverted stress field onto the body model of the target formed part after mesh division. In this way, the inverse simulation finite element model can be adjusted by adjusting the elements in the inverse simulation finite element model, such as the model of equivalent induced stress field, the process path and/or the size of the mesh cell, thereby obtaining a valid initial flattened model obtained by simulation calculation. At the same time, suitable process parameters and process path of shot peening can be determined by the equivalent induced stress field and the process path after adjusting.

According to an embodiment of the present invention, the inverse simulation method further includes applying a certain load onto the initial flattened model obtained by the inverse simulation calculation in the vicinity of the planned process path to flatten the initial flattened model.

According to an embodiment of the present invention, the inverse simulation method further includes machining according to the dimension of the initial flattened model which has been obtained, to manufacture an initial flat blank that can be provided for shot peening forming process.

The above preferred embodiments can be combined in any way to obtain each preferred embodiment of the present invention, insofar as it is not contrary to common knowledge in the art.

The advantageous effects of the above embodiments of the present invention are as follows:

1. According to this method, an accurate, valid and reliable initial flattened model can be obtained, and optimal process parameters and process path of shot peening which are matched with the flattened model can be determined, thereby the flattened blank can be machined and the target formed part can be formed by shot peening based on process parameters and the path which are matched with the flattened model;

2. In this method, comprehensive consideration is given to the theoretical simulation model and the actual engineering experience, and process parameters and the process path of shot peening are also taken into consideration during the obtaining of the initial flattened model, and the weight factor is designed to participate in the simulation calculation and verification according to the difference of formed geometry in sections of different thickness, thereby the accuracy and reliability of the initial flattened model obtained by simulation calculation can be improved;

3. According to this method, by establishing the model of equivalent induced stress field for process parameters of shot peening and verifying the established equivalent induced stress field with Almen-like strip, the accuracy of the initial flattened model which has been obtained can be ensured, at the same time, optimized process parameters and process path of shot peening can be identified by users more quickly and accurately, thereby the efficiency of shot peening forming process can be effectively improved.

Brief Description of Drawings

Fig. 1 shows a flowchart of an inverse simulation method of obtaining an initial flattened model for shot peening forming process according to a preferred embodiment of the present invention.

Fig. 2A shows a schematic diagram of a model of equivalent induced stress field constructed through the inverse simulation method according to the preferred embodiment of the present invention.

Fig. 2B shows a schematic diagram of the equivalent induced stress field model constructed through the inverse simulation method according to the preferred embodiment of the present invention subsequent to a reversal operation.

Fig. 3A shows a schematic diagram of a body model of a target formed part in the inverse simulation method according to the preferred embodiment of the present invention.

Fig. 3B shows a schematic diagram of an initial flattened model obtained through the inverse simulation method according to the preferred embodiment of the present invention.

Fig. 4A shows a schematic diagram of the body model of the target formed part generated through the inverse simulation method according to the preferred embodiment of the present invention.

Fig. 4B shows a schematic diagram of generating an inverted stress field applied along a planned process path by the inverse simulation method according to the preferred embodiment of the present invention.

Fig. 4C shows a schematic diagram of the initial flattened model obtained by the inverse simulation method according to the preferred embodiment of the present invention.

Fig. 5 shows a flowchart of the inverse simulation method according to a further preferred embodiment of the present invention.

DETAILED DESCRIPTION OF EMBODIMENTS

In order to make the purpose, technical solutions and advantages of the present application clearer, the technical solutions in the embodiments of the present application will be described clearly and fully hereinafter in conjunction with the drawings showing embodiments according to the present application. It may be understood that based on the embodiments of the present application, all the other embodiments obtained by a person of ordinary skill in the art without creative work will fall into the scope of protection of the present application.

Unless otherwise defined, all technical and scientific terms used in the present application have the same meanings as commonly understood by one of ordinary skill in the art to which the present application belongs. The terms "comprising", "having" and the like in the specification, claims, and the description of drawings of the present application are open-ended terms. Thus, for example, "comprising", "having" one or more steps means that it has one or more steps, but not limited to only those one or more steps.

In shot peening forming processes, process parameters of shot peening forming (for example, shot peening speed, shot type, shot peening pressure, and shot flow rate) and the process path of shot peening directly affect the formed geometry of a part. At present, process parameters and the process path planning of shot peening for complex parts are mainly determined manually based on engineering experience. In order to enable systematic analysis of process parameters and the process path of shot peening, based on existing researches, a finite element method can be used to introduce the expansion due to shot peening forming into the model of a part by way of constructing the equivalent induced stress field for process parameters of shot peening, so that the finite element model of the part undergoes corresponding deformation, and then it is determined whether process parameters or the process path are reasonable and valid by comparing with the actual target model.

Generally speaking, a model obtained by process engineers is a final model of the target part, and the model of the target part often exhibits a shape of complex curvature. Planning process parameters and the process path of shot peening for the target part requires first obtaining a reliable flattened blank, then performing subsequent process planning based on the flattened blank. At present, the "one-step method" based on the finite element method is mainly used for blank flattening in the industry.

However, the "one-step method" is purely a geometric flattening method, i.e., the curved wall plate is "flattened", and the "flattened" part model is used as an initial blank to perform parameters and the process path planning of shot peening. The flattening based on the "one-step method" does not take into account the expansion caused by the process, especially for the shot peening forming process in which deformation is achieved by expansion of material. Such flattening without considering the process is often inaccurate, necessitating subsequent trial-and-error corrections of the flattened part that are time-consuming and labor-intensive. Moreover, for the shot peening forming process, the flattening of a part is often correlated to the process planning. That is, the flattened result should be obtained based on the correction of expansion in a specific process, and the determination of process parameters and the process path should be planned based on a valid flattened blank.

Therefore, there are two obvious problems in current shot peening forming processes and simulations.

1. The conventional flattening method is used currently such that it is impossible to obtain an accurate flattened model related to the shot peening forming process. Currently, simulation analysis of shot peening forming mainly involves "forward simulation". The so-called "forward simulation" mainly involves applying the equivalent induced stress field onto the surface of a flat blank model based on the given flat blank model, so that the flat blank model undergoes the expansion similar to shot peening forming, thereby the model is caused to deform, and further analysis can be performed.

However, in the "forward simulation" method, it is necessary to provide a reliable flattened model after flattening in advance, and how to obtain the reliable flat blank model is one of the difficulties in the shot peening forming process. Currently, in addition to relying on process experience, there is a feasible way in the industry which is to perform the flattening based on "one-step method" by using the finite element software (e.g. hyperform). However, the flattening method based on "one-step method" is purely a geometric flattening method, and completely does not take into account the "expansion" of a part after shot peening, especially does not take into account that the "expansion" may cause the dimension of the part after shot peening to be larger than that before shot peening. Thus, the initial flattened model obtained by this method lacks engineering significance to a certain extent.

2. An evaluation criteria enabling quick and quantitative implementation cannot be provided for the simulation result after shot peening in the "forward simulation" method used currently. That is, the correctness and validity of the simulation result after deformation cannot be evaluated quickly in the simulation software, and thus the validity of the flattening cannot be determined. Taking the above-mentioned shot peening forming process using the "forward simulation" method as an example, after simulation calculation, it is necessary to compare the geometric shape of a part manufactured according to the simulation result with the model of a target part. Since part models vary in shape, it is difficult to provide a unified way to measure the matching degree in shape between different parts obtained by different simulation solutions, and part models. Moreover, it is substantially infeasible to further achieve the automatic iterative optimization analysis of process based on the evaluation result.

Therefore, at least in view of the above technical problem, the present invention provides an inverse simulation method of obtaining an initial flattened model for shot peening forming process, which effectively enables both the determination of process parameters of shot peening and the flattening of a model based on these process parameters, i.e., the obtaining of the initial flattened model. According to the inverse simulation method, the automatic screening and planning of process solution of shot peening forming can be achieved, and an initial flattened model matched with the process solution can be obtained. Moreover, a target formed part can be obtained by performing shot peening forming on the obtained initial flattened model according to the process solution of shot peening forming obtained by automatic screening and planning.

Generally speaking, the concept of the inverse simulation method of obtaining the initial flattened model for shot peening forming process mainly includes: establishing a corresponding model based on a target part, and by applying an inverted equivalent induced stress field onto the model of the target part, the material subjected to the inverted stress field undergoes corresponding reverse deformation, whereby an initial part with a curvature gradually becomes flat due to the inverted stress field. In practice, a model based on a corresponding process parameter of shot peening, which is obtained during previous analysis, is subjected to the reversal operation, i.e., the compressive stress is inverted into the tensile stress and the tensile stress is inverted into the compressive stress, without changing the model of equivalent induced stress field. In this way, a deformation opposite in direction to the initial equivalent induced stress field may be generated upon application of the inverted stress field, whereby the shrinkage of the target formed part can be achieved. Furthermore, the area where the inverted equivalent induced stress field is applied is an actual shot peening area, and the process path which has been planned is an actual process path. In addition, the correction of expansion of the flattened initial flattened model can be achieved based on the shrinkage of material of surface achieved after a reversal operation of the stress field.

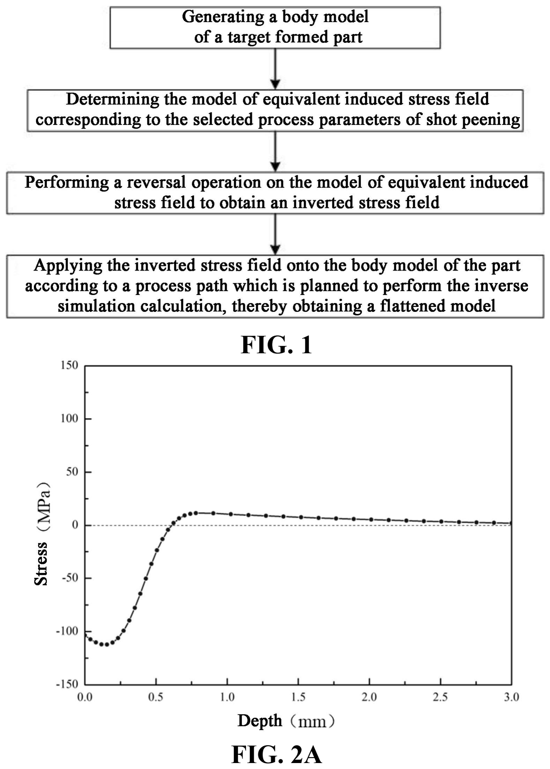

Specifically, as shown in Fig. 1, the inverse simulation method of obtaining the initial flattened model for shot peening forming process according to a preferred embodiment of the present invention includes:

Step 1 of: generating a body model of a target formed part by using a computer software based on an actual digital model of the target formed part;

Step 2 of: generating a model of Almen-like strip consistent with the body model of the part by using the computer software, applying a stress field onto the model of Almen-like strip in the finite element simulation software to perform a simulation-based deformation calculation, wherein the stress field corresponds to specific process parameters of shot peening, and continuously correcting the model of stress field during the process until the calculated deformation result is consistent with a deformation result obtained by the shot peening forming test of the Almen-like strip using the selected corresponding process parameters of shot peening, thereby determining the model of equivalent induced stress field corresponding to the selected process parameters of shot peening;

Step 3 of: performing a reversal operation on the model of equivalent induced stress field by using the finite element simulation software to obtain an inverted stress field, and applying the inverted stress field onto the body model of the part according to a process path, which is planned based on the shape of the target formed part, the selected shot peening process parameters, and the experience, to perform the inverse simulation calculation, thereby obtaining the initial flattened model.

In step 1, an actual digital model of the target formed part can be directly and quickly converted into a body model of the target formed part in the finite element simulation software for further simulation calculation.

In step 2, the model of equivalent induced stress field can be generally denoted as a polynomial function that varies as the thickness h of the part, which can be denoted by the following expression(1).

$$\sigma^{ind}(h) = \frac{\sum_{i=1}^{m+1} p_i \cdot h^{m+1-i}}{h^n + \sum_{j=1}^{n} q_j \cdot h^{n-1}} \qquad (1)$$

$$p_i \Leftrightarrow f_i(\dot{m}, p, d...) \qquad (2)$$

$$q_j \Leftrightarrow g_i(\dot{m}, p, d...) \qquad (3)$$

wherein $p_i$ and $q_j$ denote elements to be fitted in the polynomial respectively, m and n denote the term number of $p_i$ and $q_j$. $p_i$

and $q_j$ have a specific mapping relationship with process parameters of shot peening during shot peening, such as shot flow rate, shot peening pressure and shot peening distance, which is specifically denoted by expression (2) and expression (3), wherein $\dot{m}$ denotes shot flow rate, p denotes shot peening pressure, and d denotes shot peening distance.

During the simulation, in a direction downward along the thickness direction from shot peening surface, the model of equivalent induced stress field is generally a "compressive-tensile" model. In the process of obtaining the model of equivalent induced stress field for process parameters of shot peening by explicit analysis, mesh nodes around the area subjected to shot peening generally limit the movement of nodes. Therefore, when viewed from the thickness direction, the stress field shown by a model of "compressive-tensile" stress field overall exhibits a "compressive" stress state. If the model of "compressive-tensile" stress field, which overall exhibits a "compressive" stress state, is imported into a mesh model with zero-stress state, the mesh model overall exhibits a "compressive" stress state. When the mesh model is unconstrained, it release the internal stress by way of "elongation", thereby exhibiting the phenomenon of "part elongation". In this way, the result is also consistent with the phenomenon of part elongation which occurs during shot peening.

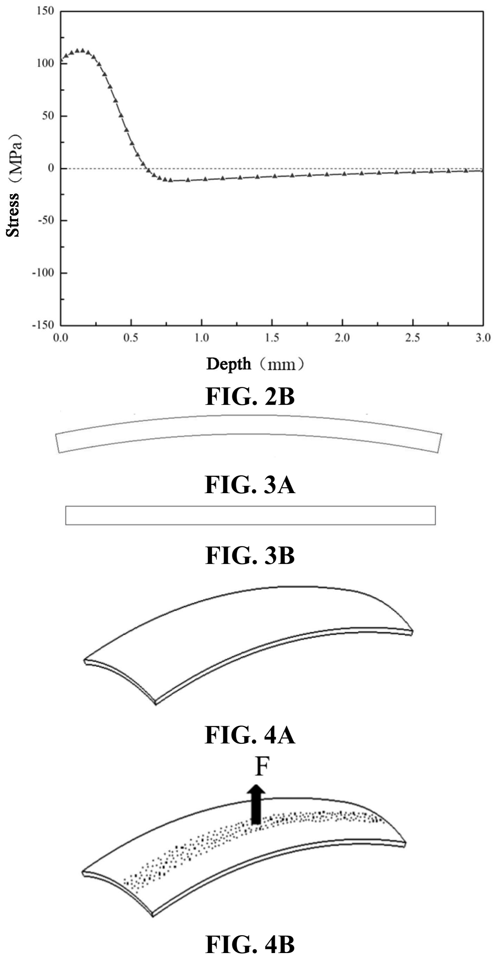

In step 2, it is assumed that a body model of the given target formed part has a total length of 1m, as shown in Fig. 3A. Before the simulation, models of equivalent induced stress field under different process parameters are constructed according to the method as described above, and the validity and reliability of the equivalent induced stress field are verified in advance by using a test specimen, such as Almen-like strip or even representative specimen. The verified model of equivalent induced stress field is shown in Fig 2A.

Then in step 3, a reversal operation is performed on the verified equivalent induced stress field, i.e., the tensile stress is inverted into compressive stress and the compressive stress is inverted into the tensile stress, and an inverted model of the equivalent induced stress field as shown in Fig. 2B is obtained. Preferably, this inverse simulation method further includes first dividing the body model of the part into several mesh cells, and applying the inverted stress field onto the body model of the part according to the planned process path to perform the inverse simulation calculation, which will be described in detail below.

Specifically, a reversal operation is performed on the initial model of equivalent induced stress (i.e., the model of "compressive-tensile" stress), i.e., the reversal operation is performed on expression (1), and the model of stress field after reversion can be denoted by $\sigma^{ind}$ in expression (4). By doing so, the model of "compressive-tensile" stress is inverted into a model of "tensile-compressive" stress, and the model of "tensile-compressive" stress overall exhibits a "tensile" stress state. When imported into the mesh model with zero-stress state, the phenomenon of the "part shortening" will occur.

$$\sigma^{ind}\left(h\right)=-\frac{\sum_i^{m_p} p_i \cdot h^{m_p+1-i}}{h^{n_q}+\sum_j^{n_q} q_j \cdot h^{n_q-1}}, \ i=1,2,...,m_p+1 \ ; j=1,2,...,n_q$$

$$(4)$$

In an example, the model of the target formed part has a length of 1m. In view of the expansion due to shot peening, the initial flattened model (i.e. the flat blank model) after inverse simulation calculation has a total length of 0.95m, as shown in Fig. 3B. A flat blank having a length of 0.95m is obtained by machining according to the initial flattened model, and the shot peening forming test is performed on the flat blank. After shot peening forming, the flat blank does not only have a shape consistent with the target part, but it also reaches a total length of 1m after expansion of shot peening, thus theoretically achieving an optimal result of shot peening.

Furthermore, the inverse simulation method may further include performing a plane fitting according to dimensional data of the initial flattened model in the finite element simulation software to calculate and obtain a variance value between the dimensional data and the fitted plane, and the initial flattened model obtained when the variance value is within a preset range is determined as a valid initial flattened model, wherein the dimensional data may include data about node position of each mesh cell in the initial flattened model. After obtaining the initial flattened model by simulation calculation, node coordinate values of all cells in the model and thickness values at positions of their corresponding cells can be obtained. All node coordinate values are fitted to a plane. After obtaining an equation of a plane by fitting, a corresponding variance $\sigma$, which can be used to represent the flatness of an initial flattened model after "flattening", may be obtained. The lower the variance $\sigma$ is, the flatter the model is.

The data about node position of each mesh cell is a product of the data about its node coordinate value and a weight factor of node, wherein the weight factor of node is positively correlated with the thickness value corresponding to its mesh cell. During the fitting, the specific correlation between the weight of node coordinate value and the corresponding thickness value at this node may be determined based on an actual engineering requirement, for example, the weight may be determined according to the square of the thickness value. Moreover, the specific functional relationship between the weight factor and the thickness value may be determined based on an actual on-site requirement.

The reason for using the weight factor is that, in actual engineering practices, it was found that thicker sections of a part often require higher forming accuracy than thinner sections of the part. Therefore, based on this engineering requirement, the following weight factor can be incorporated such that the thicker the plate is, the greater the assigned weight is. A valid initial flattened model can be obtained according to such weight-based method of flatness evaluation, i.e., according to a method of obtaining all node coordinate values of mesh cells in the initial flattened models after simulation calculation, and performing the weight-based plane fitting on these nodes, and finally evaluating the flatness of the "flattened" part by using the variance of fitting.

At the same time, when the variance value lies outside the preset range, the model of equivalent induced stress field, the planned process path, and/or the size of the mesh cell are continuously adjusted until the variance value falls within the preset range, whereby process parameters of shot peening can be determined based on the adjusted model of equivalent induced stress field.

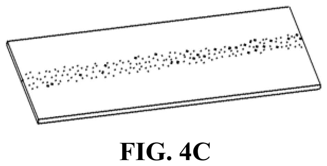

Optionally, the planned process path may include a plurality of process paths of shot peening, and the inverse simulation method further includes, for each of process paths of shot peening, applying an inverted stress field F onto a body model of the part shown in Fig. 4A according to the process path of shot peening, to perform the inverse simulation calculation and obtain the initial flattened model shown in Fig. 4C, thereby obtaining a plurality of initial flattened models, as shown in Figs. 4A to 4C. At this point, the inverse simulation method further includes successively performing the plane fitting on a plurality of initial flattened models to calculate a plurality of corresponding variance values, determining a minimum variance value within a preset range by comparison, and obtaining optimal process parameters and process path of shot peening based on the determined minimum variance value.

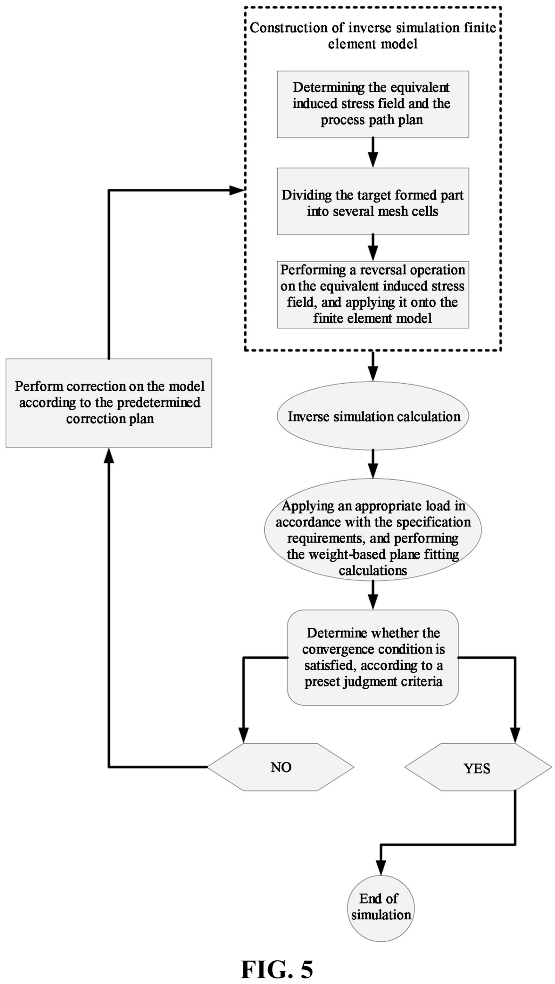

Alternatively, as shown in Fig. 5, the inverse simulation method according to the preferred embodiment of the present invention may further include: creating candidate process solutions according to the process plan, wherein the process solutions includes a model of equivalent induced stress field, a planned process path solution, and the like; constructing a finite element mesh model for the target part, and establishing a respective finite element inverse simulation model by performing a reversal operation on the equivalent induced stress field according to the created candidate process solutions; according to these planned candidate process solutions, performing the iterative simulation analysis based on the constructed finite element model, and each of analytical results feeds back one variance value of the plane fitting; selecting an optimal combination of process parameters and the process path of shot peening based on variance values of many solutions; obtaining a corresponding flattening result of the target formed part based on the selected optimal combination of process parameters and the process path of shot peening.

Moreover, when the variance value fails to meet the preset range, the finite element inverse simulation model is adjusted until the variance value falls within the preset range. Preferably, a certain load is applied onto the initial flattened model obtained by inverse simulation calculation in the vicinity of the planned process path to flatten the initial flattened model, thereby preventing deformation of the area that does not apply the stress field from affecting the calculated structure. Additionally, in view of the actual shot peening forming process, the forming accuracy of a thicker section is more critical than that of a thinner section, during the actual process, the thinner sections may be flattened by applying a standardized external load, thereby avoiding the influence of the thinner sections on variance calculation.

A flattened model obtained based on the inverted equivalent induced stress field is an initial flattened model, process parameters corresponding to the inverted equivalent induced stress field are actual process parameters of shot peening, the process path to which apply the stress field is an actual process path of shot peening, and the flattened model is a flattened model corresponding to parameters and the process path of shot peening. According to the inverse simulation method of the present invention, a flattened model considering the process expansion, and a corresponding process solution are obtained by way of the inverse simulation, thereby an accurate and valid result of shot peening forming is obtained.

According to this inverse simulation method, an initial process path of shot peening can be obtained based on empirical analysis according to the geometric shape of the target formed part, and an inverted equivalent induced stress field is applied onto the body model of the target formed part according to the planned process path of shot peening. As the iterative simulation calculation proceeds, the model gradually becomes flat, resulting in a flat plate. Due to the shrinkage after applying the inverted equivalent induced stress field, the length of the part is shortened as the part is flat. Under the condition that the model of equivalent induced stress field has no error and the process path of shot peening is just optimal, an initial part provided for shot peening forming process can be manufactured by machining according to the dimension of the initial flattened model which has been obtained, and a target formed part can be obtained by performing the shot peening forming on the initial part.

Although specific embodiments of the present invention have been described herein, it will be appreciated by those of ordinary skill in the art that these are merely exemplary and the scope of the present invention is defined by the appended claims. Those of ordinary skill in the art may make various changes or modifications to these embodiments without departing from the spirit and essence of the present invention, and such changes and modifications are intended to fall within the scope of protection of the present invention.

**Claims**

1. An inverse simulation method of obtaining an initial flattened model for shot peening forming process, comprising the steps of:

   generating a body model of a target formed part by using a computer software based on an actual digital model of said target formed part;

   generating a model of Almen-like strip consistent with the body model of the target formed part by using said computer software, and applying a stress field onto said model of Almen-like strip in a finite element simulation software to perform a simulation-based deformation calculation, wherein said stress field is continuously adjusted until the calculated deformation result is consistent with a deformation result obtained by a shot peening forming test of the Almen-like strip using the selected process parameters of shot peening, thereby determining a model of equivalent induced stress field corresponding to said selected process parameters of shot peening; and

   performing a reversal operation on said model of equivalent induced stress field by using said finite element simulation software to obtain an inverted stress field, and applying said inverted stress field onto the body model of said target formed part according to a process path which is planned based on the shape and dimension of said target formed part, the selected process parameters of shot peening, and experience, to perform an inverse simulation calculation, thereby obtaining the initial flattened model.

2. The inverse simulation method of claim 1, further comprising:
   dividing the body model of said target formed part into several mesh cells, and applying said inverted stress field onto the body model of the target formed part after mesh division according to the planned process path to perform the inverse simulation calculation.

3. The inverse simulation method of claim 2, further comprising:
   performing a plane fitting according to the dimensional data of said initial flattened model by using said finite element simulation software to obtain a variance value between said dimensional data and the fitted plane, wherein the initial flattened model obtained when the variance value is within a preset range is determined as a valid initial flattened model.

4. The inverse simulation method of claim 3, wherein said dimensional data comprises data about node position of each mesh cell in said initial flattened model, wherein said data about node position is a product of data about node coordinate value and a weight factor of node.

5. The inverse simulation method of claim 4, wherein said weight factor of node is positively correlated with a thickness value corresponding to its mesh cell.

6. The inverse simulation method of claim 3, wherein said planned process path comprises a plurality of process paths of shot peening, and said inverse simulation method further comprises:
   for each of the process paths of shot peening, applying the inverted stress field onto the body model of the target formed part after mesh division according to the process path of shot peening to perform the inverse simulation calculation, thereby obtaining a plurality of initial flattened models.

7. The inverse simulation method of claim 6, further comprising:
   successively performing the plane fitting on said plurality of initial flattened models to calculate a plurality of corresponding variance values, determining a minimum variance value within said preset range by comparison, and obtaining optimal process parameters and process path of shot peening based on the determined minimum variance value.

8. The inverse simulation method of claim 3, further comprising:
   continuously adjusting said model of equivalent induced stress field, said planned process path and/or the size of said mesh cell when said variance value lies outside the preset range, until said variance value falls within said preset range, thereby enabling the determination of process parameters of shot peening based on the adjusted model of equivalent induced stress field.

9. The inverse simulation method of claim 1, further comprising:
   applying a certain load onto the initial flattened model obtained by the inverse simulation calculation in the vicinity of the planned process path to flatten said initial flattened model.

10. The inverse simulation method of any one of the preceding claims 1 to 9, further comprising:
    machining according to the dimension of the obtained initial flattened model, to manufacture an initial flat blank that can be provided for shot peening forming.

```
┌─────────────────────────────────────┐
│        Generating a body model       │
│        of a target formed part       │
└─────────────────────────────────────┘
                    │
                    ▼
┌─────────────────────────────────────────────────┐
│ Determining the model of equivalent induced      │
│ stress field corresponding to the selected       │
│ process parameters of shot peening               │
└─────────────────────────────────────────────────┘
                    │
                    ▼
┌─────────────────────────────────────────────────┐
│ Performing a reversal operation on the model of  │
│ equivalent induced stress field to obtain an     │
│ inverted stress field                            │
└─────────────────────────────────────────────────┘
                    │
                    ▼
┌─────────────────────────────────────────────────┐
│ Applying the inverted stress field onto the body │
│ model of the part according to a process path    │
│ which is planned to perform the inverse          │
│ simulation calculation, thereby obtaining a      │
│ flattened model                                  │
└─────────────────────────────────────────────────┘
```

## FIG. 1

## FIG. 2A

**FIG. 2B**

**FIG. 3A**

**FIG. 3B**

**FIG. 4A**

**FIG. 4B**

**FIG. 4C**

**FIG. 5**

## INTERNATIONAL SEARCH REPORT

| International application No. |
| --- |
| **PCT/CN2023/128469** |

| A. | CLASSIFICATION OF SUBJECT MATTER |
| --- | --- |

G06F 30/17(2020.01)i

According to International Patent Classification (IPC) or to both national classification and IPC

| B. | FIELDS SEARCHED |
| --- | --- |

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS; CNTXT; DWPI; VEN; WPABS; ENTXT; CNKI; IEEE; ISI: 喷丸, 展开, 模型, 逆向, 仿真, 阿尔门, 应力场, 变形, 等效, 诱导, shot peening, expansion, model, reverse, simulate, ALMEN, stress field, deformate, equivalence, induction

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | 江剑成等 (JIANG, Jiancheng et al.). "复杂型面激光喷丸成形毛坯展平方法 (Complex Surface Flattening Method Based on Laser Peen Forming Mechanism)" 电加工与模具 (*Electromachining & Mould*), 31 October 2019 (2019-10-31), pages 38-43 | 1-10 |
| A | 肖旭东 (XIAO, Xudong). "弹丸喷丸应力场建模与条带喷丸整体变形模拟 (Modeling of Shot Peening Stresses and Simulation of Integral Deformation of Strip Peen Forming)" 中国博士学位论文全文数据库 工程科技II辑 (*Science-Engineering (II), China Doctoral Dissertations Full-Text Database*), 15 January 2017 (2017-01-15), text, pages 129-153 | 1-10 |
| A | WANG, Junqiang et al. "Analytical Modelling of Shot-peening Residual Stress on Welding Carbon Steel Surface Layer" *https://doi.org/10.1007/s11595-016-1538-x*, 01 March 2017 (2017-03-01), pages 1352-1362 | 1-10 |
| A | CN 106312323 A (GUANGDONG UNIVERSITY OF TECHNOLOGY) 11 January 2017 (2017-01-11) entire document | 1-10 |

| ✓ Further documents are listed in the continuation of Box C. | ✓ See patent family annex. |
| --- | --- |

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **10 January 2024** | **27 January 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/128469** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 113704929 A (SHANGHAI JIAO TONG UNIVERSITY) 26 November 2021 (2021-11-26)<br>entire document | 1-10 |
| A | JP 2004154812 A (AIKOKU ALPHA CORP.) 03 June 2004 (2004-06-03)<br>entire document | 1-10 |

Form PCT/ISA/210 (second sheet) (July 2022)

**INTERNATIONAL SEARCH REPORT**
Information on patent family members

International application No.

**PCT/CN2023/128469**

| Patent document cited in search report | | | Publication date (day/month/year) | Patent family member(s) | | | Publication date (day/month/year) |
|---|---|---|---|---|---|---|---|
| CN | 106312323 | A | 11 January 2017 | WO | 2018082346 | A1 | 11 May 2018 |
| | | | | CN | 106312323 | B | 12 March 2019 |
| CN | 113704929 | A | 26 November 2021 | | None | | |
| JP | 2004154812 | A | 03 June 2004 | JP | 3803080 | B2 | 02 August 2006 |

Form PCT/ISA/210 (patent family annex) (July 2022)